# EUROPÄISCHE PATENTSCHRIFT

(11) **EP 1 480 734 B1**
(45) Veröffentlichungstag und Bekanntmachung des Hinweises auf die Patenterteilung: **04.04.2007**
(21) Anmeldenummer: 03717113.9
(22) Anmeldetag: 26.02.2003
(51) Int. Cl.: B01D 63/08, B01D 65/00, B01D 65/08, B01D 53/22

(54) **VORRICHTUNG ZUM AUFBEREITEN UND TRENNEN VON INSBESONDERE BIOLOGISCH ORGANISCHEN STRÖ MUNGSMEDIEN**
DEVICE FOR THE PREPARATION AND SEPARATION OF ESPECIALLY BIOLOGICALLY ORGANIC FLOW MEDIA
DISPOSITIF DE TRAITEMENT ET DE SEPARATION DE MILIEUX FLUIDES ORGANIQUES, EN PARTICULIER BIOLOGIQUES

(30) Priorität: 07.03.2002 DE 10209918
(43) Veröffentlichungstag der Anmeldung: 01.12.2004
(73) Patentinhaber: GKSS Forschungszentrum, 21502 Geesthacht (DE)
(72) Erfinder: HILGENDORFF, Walter, 21395 Tespe (DE); SCHARNAGL, Nico, 21514 Büchen (DE)
(74) Vertreter: Seemann, Ralph
(86) Internationale Anmeldenummer: PCT/DE2003/000618
(87) Internationale Veröffentlichungsnummer: WO 2003/074160

(56) Entgegenhaltungen:
- EP-A- 0 078 667
- EP-A- 1 118 376
- DE-A- 4 439 982
- US-B1- 6 258 270

## Beschreibung

Die Erfindung betrifft eine Vorrichtung zum Aufbereiten und Trennen von, insbesondere biologisch organischen, Strömungsmedien durch flüssige oder gasförmige Membranpermeation, umfassend einen Stapel aus einer Mehrzahl voneinander mittels eines Abstandselements beabstandeter Membranelemente, wobei die Membranelemente des Stapels vom Strömungsmedium umflossen werden und das von den Membranelementen gelieferte Permeat in wenigstens einem den Stapel durchquerenden Element gesammelt und nach außen abgeführt wird, wobei das Abstandselement in Strömungsrichtung des zu trennenden Mediums eine größere Ausdehnung als Ausdehnung quer zur Strömungsrichtung aufweist.

EP-A-0 078 667 beschreibt eine Vorrichtung zum Trennen flüssiger Speisegemische mittels eines Stapels semipermeabler Membranen in einem Druckbehälter, wobei die semipermeablen Membranen gegen permeable Membranunterstützungsplatten anliegen und die Platten zwecks Bildung von Membrankanälen durch Konstruktionselemente in Abstand voneinander gehalten werden.

Eine Vorrichtung dieser Art ist ebenfalls bekannt aus DE-C-44 39 982. Neben vielen anderen im Stand der Technik bekannten Vorrichtungen zum Trennen von Strömungsmedien der verschiedensten Arten ist die voranstehend genannte, gattungsgemäße Vorrichtung insbesondere auf die Trennung biologisch organischer Strömungsmedien ausgerichtet. Biologisch organische Strömungsmedien sind insbesondere kommunale und/oder gewerbliche Abwässer, wie sie beispielsweise in privaten Haushalten, Hotelanlagen, auf Passagierschiffen und dergleichen anfallen, gewerbliche Abwässer, die einen hohen biologisch organischen Anteil enthalten, sind beispielsweise Abwässer der lebensmittelherstellenden Industrie und dergleichen.

Ein wesentliches, bei der Aufbereitung dieser Art von Abwässern auftretendes Problem ist das, daß aufgrund des hohen biologisch organischen Anteils im zu trennenden Strömungmedium sich beim Überströmen des Strömungsmediums über die Membranelemente in bestimmten Bereichen der Membranelemente sehr leicht Ablagerungen aus den biologisch organischen Bestandteilen des Strömungsmediums bilden können, die, nachdem sich erst einmal eine Keimzelle an Ablagerungen gebildet hat, sehr schnell größer werden und nachfolgend das jeweilige Membranelement wirkungslos machen, d. h. im wesentlichen verblocken.

Diese Bildung von Ablagerungen hat im wesentlichen seine Ursache darin, daß derartige Vorrichtungen in bezug auf das über die Vorrichtungen geleitete Strömungsmedium nur mit sehr geringer Fließgeschwindigkeit des Strömungsmediums über die Membranelemente, die in dem Stapel zusammengefaßt sind, betrieben wird. Es ist zwar möglich, der Bildung von Ablagerungen auf den Membranoberflächen bis zu einem gewissen Maße Einhalt zu gebieten, in dem beispielsweise die Fließgeschwindigkeit des Strömungsmediums über die Membranoberflächen erhöht wird, dieses hat jedoch wiederum den Nachteil, daß dadurch leistungsfähigere Pumpen bereitgestellt werden müssen, die einerseits kostspieliger als Niederdruckpumpen sind und andererseits einen hohen Energieverbrauch haben, der gerade im Zusammenhang beispielsweise mit der Aufbereitung kommunaler Abwässer der vorbeschriebenen Art vermieden werden soll.

Wesentliche Orte auf der Oberfläche der Membranelemente, an denen sich die besagten Keimzellen von Ablagerungen bilden, die, wie gesagt, nachfolgend regelmäßig sehr schnell größer werden, sind im wesentlichen die hinter dem Element gelegenen Membranelementbereiche, das bisweilen rohrförmig und stangenförmig ausgebildet ist und den Stapel der Membranelemente durchquert, in dem das von den Membranelementen gelieferte Permeat gesammelt und nach außen abgeführt wird. Das zu trennende Strömungsmedium überstreicht das Membranelement und trifft dabei auf das besagte Permeatsammel- bzw. -leitelement, das den Stapel von Membranelemienten durchquert. In Strömungsrichtung des Strömungsmediums hinter dem besagten Element bildet sich eine Totzone, bei der die Strömung des Strömungsmediums gegenüber der Strömungsgeschwindigkeit an den äußeren Bereichen der Membranelemente zu Null geht, so daß sich dort die besagten Keimzellen für die Ablagerungen bilden können, die innerhalb kurzer Zeit zu einer großflächigen Ablagerung anwachsen und die Membranelemente verblocken.

Eine Reinigung der Membranelemente, d. h. die Entfernung der Ablagerungen, kann dann lediglich auf chemische Weise erfolgen, was aber aus vielerlei Gründen nicht gewünscht wird und auch vielfach aufgrund des mit chemischen Reinigungssubstanzen angereicherten Retentats nicht praktikabel ist, da dadurch beispielsweise in einer Kläranlage die für den Klärungsprozess dort angesiedelten Mikroorganismen absterben, und eine mechanische Reinigung zum einen eine vollständige Demontage der Vorrichtung erfordert und zum anderen dabei die Membranelemente leicht beschädigt werden können.

Es ist somit Aufgabe der vorliegenden Erfindung, eine Vorrichtung der eingangs genannten Art zu schaffen, die auch bei der Trennung von Strömungsmedien eingesetzt werden kann, die hochgradig mit biologisch organischen Anteilen angereichert sind, die dabei mit geringen Energiekosten auskommt und verblockungs- und damit wartungsfrei arbeiten kann, wobei die Vorrichtung selbst einen einfachen Aufbau haben soll, so dass sie kostengünstig bereitstellbar sein soll und quasi wartungsfrei betrieben werden kann.

Gelöst wird die Aufgabe durch eine Vorrichtung zum Aufbereiten und Trennen von, insbesondere biologisch organischen, Strömungsmedien durch flüssige oder gasförmige Membranpermeation, die einen Stapel aus einer Mehrzahl voneinander mittels eines Abstandselements beabstandeter Membranelemente umfasst, wobei die Membranelemente des Stapels vom Strömungsmedium umschlossen werden und das von den Membranelementen gelieferte Permeat in wenigstens einem den Stapel durchquerenden Element gesammelt und nach außen abgeführt wird, wobei das Abstandselement in Strömungsrichtung des zu trennenden Mediums eine größere Ausdehnung als Ausdehnung quer zur Strömungsrichtung aufweist, die sich dadurch auszeichnet, dass am Rand des Abstandselements ein Dichtungselement so angeordnet ist, dass sich das Dichtungselement zwischen zwei Membranelementen befindet.

Der Vorteil der erfindungsgemäßen Lösung besteht im Wesentlichen darin, dass, wie erfindungsgemäß angestrebt, tatsächlich durch die Art des Aufbaus bzw. der Formgebung des Abstandselements mit dem am Rand des Abstandselements angeordneten Dichtungselement in Strömungsrichtung des Strömungsmediums hinter dem Element zum Sammeln bzw. Ableiten des Permeats sich keine Keimzelle für Ablagerungen oder sich keine Totzone bilden kann. Durch die erfindungsgemäße Ausbildung des Abstandselements wird auch der zum Permeatableitungs- bzw. -sammelelement gerichtete Teil des Strömungsmediums verwirbelungsfrei herumgeführt, so dass die Geschwindigkeit des Strömungsmediums über die gesamte Breite des Membranelements im wesentlichen gleich ist und sich keine Totzonen bilden können.

Die erfindungsgemäß vorgeschlagene Maßnahme scheint in rückschauender Betrachtung einfach zu sein, sie ist aber eine Maßnahme, die der bisher in der Fachwelt vertretenen Annahme zuwiderläuft, daß die für den Trennvorgang eingesetzte Membranfläche so groß wie nur irgend möglich auch unter Inkaufnahme der nachteiligen Totzonen für das Strömungsmedium angestrebt werden sollen. Da zwar mit der erfindungsgemäßen Lösung ein Teil der Membranfläche bewußt nicht vom Strömungsmedium überstrichen werden kann, steht faktisch eine geringere Flächengröße zur Verfügung, dieser scheinbare Nachteil wird aber durch einen ablagerungs- und damit verblockungsfreien Betrieb der Vorrichtung nicht nur aufgewogen, sondern tritt bei der gesamtwirtschaftlichen Betrachtung der Vorrichtung gegenüber bekannten Lösungen vernachlässigbar in den Hintergrund.

Gemäß einer vorteilhaften Ausgestaltung der Vorrichtung ist das Abstandselement an seinen beiden in Strömungsrichtung ausgerichteten Enden spitz auslaufend ausgestaltet, d. h. im wesentlichen nach Art eines gleichseitigen Parallelogramms ausgebildet, was, wie Versuche ergeben haben, schon eine hervorragende Strömungsumlenkung des Strömungsmediums um das Permeatsammel- bzw. -abführelement herum bewirkt.

Gemäß einer weiteren vorteilhaften anderen Ausgestaltung des Abstandselements kann dieses auch eine hydrodynamisch sehr günstige Tropfenform aufweisen, wobei die Tropfenform in Strömungslängsrichtung des Abstandselements nicht symmetrisch zu sein braucht.

Der Stapel der Vorrichtung an Membranelementen kann eine grundsätzlich beliebige Mehrzahl von Membranelementen enthalten, die alle durch die vorangehend beschriebenen Abstandselemente voneinander beabstandet im Stapel gehalten werden. Infolge der gewählten Konstruktion der Vorrichtung in bezug auf die Zufuhr des zu trennenden Mediums zu den Membranelementen kann auch der Abstand der Membranelemente im Stapel voneinander variieren, d. h. die Abstandselemente können derart ausgebildet sein, daß diese im Stapel der Membranelemente eine unterschiedliche Dicke aufweisen.

Vorzugsweise ist am Abstandselement der im wesentlichen senkrecht zur Ebene der Membranelemente verlaufende Rand derart ausgebildet, daß ein den Rand umlaufendes Dichtungselement am Rand befestigbar ist. Dieses Dichtungselement hat einerseits die Aufgabe, die beiden beidseitig an das Abstandselement angrenzenden Membranelemente abzudichten, so daß das zu trennende Medium nicht in den Bereich des aus den Membranelementen austretenden Permeats gelangen kann, und im Zusammenhang mit der Führung des zu trennenden Mediums um das Abstandselement herum andererseits auch die Aufgabe hat, das Strömungsmedium selbst vom Abstandselement fernzuhalten, so daß sich auch auf ihm keine Keimzellen für Ablagerungen bilden können. Der Werkstoff, aus dem das Abstandselement besteht, der ein elastomerer Werkstoff ist, ist so gewählt, daß die Feststoffanteile und sonstigen Verunreinigungen, die im zu trennenden Medium mitgeführt werden, daran nicht haften, was gleichermaßen für das Dichtungselement gilt.

Es sei darauf hingewiesen, daß das Abstandselement auch selbst dichtende Eigenschaften gegenüber den Membranelementen aufweist. Das kann durch entsprechende konstruierte Ausgestaltung des Abstandselements und/oder durch geeignete Wahl des Werkstoffs des Abstandselements realisiert sein.

Grundsätzlich kann das Dichtungselement jede beliebige geeignete Form aufweisen, um die Dichtfunktion im vorbeschriebenen Sinne effektiv ausführen zu können. Vorzugsweise ist das Dichtelement aber in Form eines 0-Ringes ausgebildet, so daß es sich leicht am umlaufenden Rand des Abstandselements in eine dort ausgebildete umlaufende Nut einsetzen und mit geringer Vorspannung halten läßt. Der 0-Ring hat auch einen beliebigen geeigneten Querschnitt, beispielsweise kreisförmig, was allerdings nicht für alle denkbaren Anwendungsfälle bzw. konstruktiven Ausgestaltungen des Abstandselements erforderlich ist.

Die Membranelemente sind vorteilhafterweise in Form sogenannter Membrantaschen ausgebildet, die in der Fachwelt auch Membrankissen bzw. Kissenmembranen genannt werden. Membrantaschen, die gemäß der Erfindung vorzugsweise eingesetzt werden können, sind beispielsweise in der EP-B-0 129 663 beschrieben. Membrantaschen dieser Art zeichnen sich dadurch aus, daß diese zwei im wesentlichen gleiche Membranelemente aufweisen, die aufeinandergelegt an ihrem gemeinsamen Außenrand druck- und flüssigkeitsdicht miteinander verbunden sind, so daß auf die Membranelemente von außen einwirkendes zu trennendes Medium durch die Membranelemente in den Innenraum zwischen beiden Membranelementen als Permeat hineinpermeiert und dann zu einem Abflußloch oder mehreren Abflußlöchern für das Permeat gelangt, um das bzw. die herum die besagten Abstandselemente angeordnet sind.

Gemäß einer besonders vorteilhaften Ausgestaltung der Membrantaschen ist zwischen den diese jeweils beidseitig begrenzenden Membranelementen bzw. Membranelementseiten jeweils wenigstens ein flächiges Stabilisierungselement angeordnet. Dieses Stabilisierungselement hat die Aufgabe, die Membrantasche im Membranelementstapel derart im Strömungsmedium stabil zu halten, daß die Membranelemente sich beim Überströmen mit zu trennendem Medium nicht berühren, und zwar infolge von durch Turbulenzen des Strömungsmediums erzeugten Schwingungen der Membranelemente. Die eigentlichen Werkstoffe, die die Membranelemente bilden, sind selbst nicht mechanisch stabil, d. h. diese lassen sich ohne geeignete Stabilisierungselemente sehr leicht in allen Richtungen verbiegen.

Um den Stapel in seiner Gesamtheit stabil zu halten und die Möglichkeit zu schaffen, daß der Stapel aus mit Dichtungselementen versehenden Abstandselementen sowie Membranelementen bzw. Membrantaschen mit einer solchen Kraft dichtend aneinandergedrückt wird, daß ein luft- und flüssigkeitsdichter Abschluß der Volumenbereiche zwischen zwei voneinander jeweils beabstandeten Membranelementen bzw. Membrantaschen geschaffen wird, ist gemäß einer weiteren vorteilhaften Ausgestaltung der Stapel beidseitig mit scheibenförmig ausgebildeten Begrenzungselementen versehen, die mechanisch stabil sind.

Der Stapel kann dabei durch wenigstens ein stangenförmiges Element, das beidseitig an jeweils einem der Begrenzungselemente befestigt ist, zusammengehalten bzw. zusammengedrückt werden, es ist aber auch möglich, die nötige Kraft zum Zusammendrücken des Stapels über von außen auf den Stapel bzw. die Begrenzungselemente des Stapels einwirkende Kräfte durch geeignete äußere Konstruktionen zu bewirken.

Das besagte stangenförmige Abstandselement kann aber auch derart ausgestaltet sein, daß es die Funktion des den Stapel durchquerenden Elements zusätzlich ausführt, nämlich die Sammlung des von den Membranelementen gelieferten Permeats und seine Abführung nach außen.

In wenigstens einem Begrenzungselement ist vorteilhafterweise wenigstens ein Zulauf für das Strömungsmedium und/oder wenigstens ein Ablauf für das Retentat vorgesehen, wobei diese Ausgestaltung der Vorrichtung vorzugsweise dann verwendbar ist, wenn der Stapel vorzugsweise in einem Gehäuse in seiner Gesamtheit aufgenommen wird.

Wenn der Stapel ohne Gehäuse verwendet wird, d. h. schwebend in einem Behälter oder auf dem Boden eines Behälters abgesenkt gehalten wird, in dem das zu trennende Medium vorhanden ist, erfolgt der Zulauf des zu trennenden Mediums von allen Seiten des Stapels bzw. der den Stapel bildenden Membranelementen, was gleichermaßen auch für den Ablauf bzw. die Abläufe des Retentats gilt.

Um auf einfache Weise die Membranelemente des Stapels mit beispielsweise Reinwasser säubern zu können und/oder auch mittels Luft mit geringem Überdruck gegenüber dem Druck des zu trennenden Mediums die Membranelemente spülen bzw. säubern zu können, weist die Vorrichtung schließlich in wenigstens einem Begrenzungselement wenigstens eine Belüftungsöffnung für die Zufuhr eines flüssigkeitsförmigen bzw. gasförmigen Mediums auf. Diese Öffnung ist insbesondere dann nötig, wenn der Stapel in einem Gehäuse aufgenommen wird und nicht, wie ebenfalls möglich und schon beschrieben, entweder schwebend in einem Behälter gehalten wird oder auf dem Boden des Behälters angeordnet ist, in dem sich das zu trennende Medium befindet.

Wird ein Gehäuse für die Vorrichtung verwendet, ist dieses vorzugsweise druckdicht ausgebildet, so daß ein definierter Druck innerhalb des Behälters und somit für den bestimmungsgemäßen Filter- bzw. Trennvorgang des zu trennenden Mediums ausgeübt werden kann.

Die Erfindung wird nun unter Bezugnahme auf die nachfolgenden schematischen Zeichnungen anhand eines Ausführungsbeispieles im einzelnen beschrieben. Darin zeigen:
- Fig. 1: im Schnitt eine Vorrichtung gemäß der Erfindung, bei der ein stangenförmiges Verbindungselement den Stapel aus Membranelementen, Abstandselementen und Dichtungselementen zusammenhält, wobei das rohrförmige Element gleichzeitig als Element zum Sammeln und nach außen Abführen des Permeats ausgebildet ist,
- Fig. 2: einen Ausschnitt in vergrößerter Darstellung von Fig. 1, insbesondere den Randbereich zum Permeatablaufelement und eine dort hineinmündende Permeatablauföffnung zeigend,
- Fig. 3: eine Draufsicht auf ein als Membrantasche ausgebildetes Membranelement mit aufgesetztem Abstandselement und einem das Abstandselement umlaufend ergreifenden Dichtungselement,
- Fig. 4: eine Darstellung ähnlich der Darstellung von Fig. 1 im Schnitt, jedoch den Membranstapel ohne umgebendes Gehäuse in einem Behälter angeordnet zeigend, in dem sich das zu trennende Medium befindet,
- Fig. 5: in der Seitenansicht im Schnitt eine Darstellung gemäß Fig. 4, jedoch in der Seitenansicht um 90° gedreht zeigend, und
- Fig. 6: zwei hintereinander angeordnete Vorrichtungen gemäß der Erfindung, wobei die in der Darstellung obere Vorrichtung der gemäß Fig. 4 entspricht und die in der Darstellung von Fig. 6 untere Vorrichtung der in Fig. 1 dargestellten entspricht, und wobei diese untere Vorrichtung der Sauerstoffanreicherung für die der eigentlichen Trennung des zu trennenden Mediums dienenden Vorrichtung liefert.

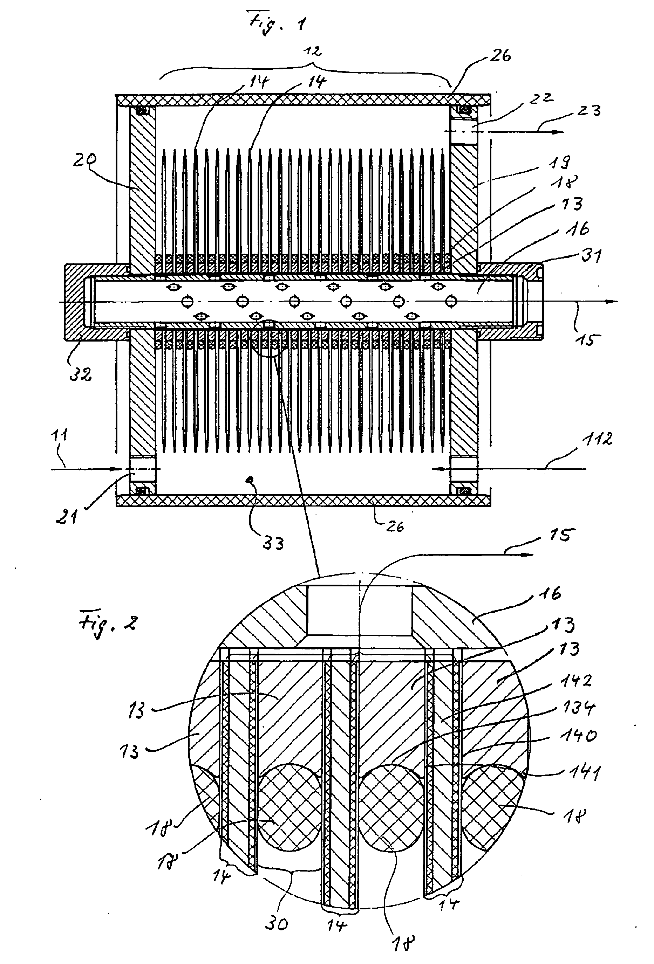

Es wird zunächst Bezug genommen auf die Darstellung der Vorrichtung 10 gemäß Fig. 1. Die Vorrichtung 10 umfaßt im wesentlichen einen Stapel 12 aus einer Mehrzahl voneinander mittels Abstandselementen 13 beabstandeter Membranelemente 14, die als sogenannte Membrantaschen ausgebildet sind. Der Stapel 12 aus Abstandselementen 13 und Membranelementen 14, die einander abwechselnd den Stapel 12 bilden, werden durch ein Element 16 (Permeatsammelelement), das den Stapel 12 bei dem in den Figuren dargestellten Ausführungsbeispiel im wesentlichen mittig durchquert, unter axialem Druck zusammengehalten. Der Stapel 12 wird beidseitig durch flächenförmige Begrenzungselemente 19, 20 begrenzt.

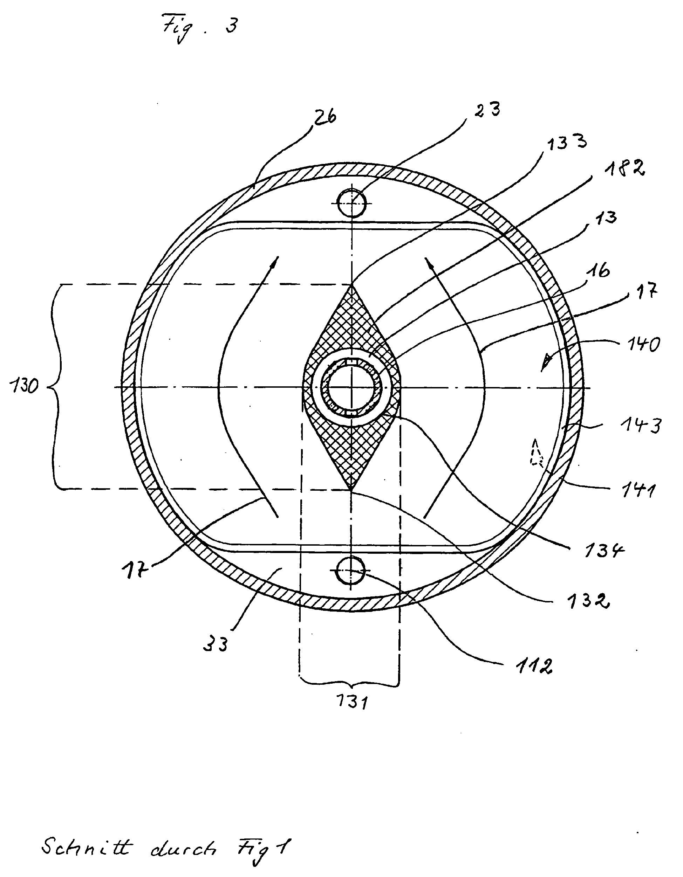

Das Element 16 ist bei dem in den Figuren dargestellten Ausführungsbeispiel auch ein Spannelement, um den Stapel 12 derart zusammenzudrücken, daß die an den Abstandselementen 13 an dessen Rand 134 angeordneten Dichtungselemente 18 derart zusammengedrückt werden, so daß eine Dichtung zwischen zwei Membranelementen 14, vgl. auch Fig. 2, geschaffen wird. Der so gebildete Raum 30 für das Strömungsmedium zwischen zwei Membranelementen 14 und dem Dichtungselement 18 bzw. dem Abstandselement 13 ist der Raum des Stapels 12, der vom Strömungsmedium 11 beim Überstreichen der Membranelemente 14 zwischen jeweils zwei derart benachbarten Membranelementen 14 gebildet wird.

Das hier auch als Spannelement für den Stapel 12 genutzte Element 16 (Permeatsammelelement) wird beidseitig über jeweilige Muttern 31, 32, die in entsprechende Außengewinde des Spannelements greifen, unter beidseitigem Abschluß mit den Begrenzungselementen 19, 20 zusammengehalten.

Im Begrenzungselement 20 ist ein Zulauf für das zu trennende Medium 11 vorgesehen, und im gegenüberliegenden Begrenzungselement 19 ein Zulauf für das Spülgas 112 zur Reinigung der Membrantaschen. Im Begrenzungselement 19 ist außerdem ein Ablauf 22 für das die Vorrichtung 10 verlassende Retentat 23 vorgesehen, was gleichermaßen auch für das Begrenzungselement 20 gelten kann, wobei allerdings in Fig. 1 ein derartiger Ablauf 22 nicht gesondert dargestellt ist. Es können mehrere Zuläufe und mehrere Abläufe 21, 22 jeweils in den Begrenzungselementen 19, 20 vorgesehen sein.

Die Vorrichtung 10 gemäß Fig. 1 ist mit einem Gehäuse 26 versehen, so daß der Innenraum 33 des Gehäuses 26 mittels geeigneter Dichtungselemente druckdicht gegenüber dem Außenraum ausgebildet ist.

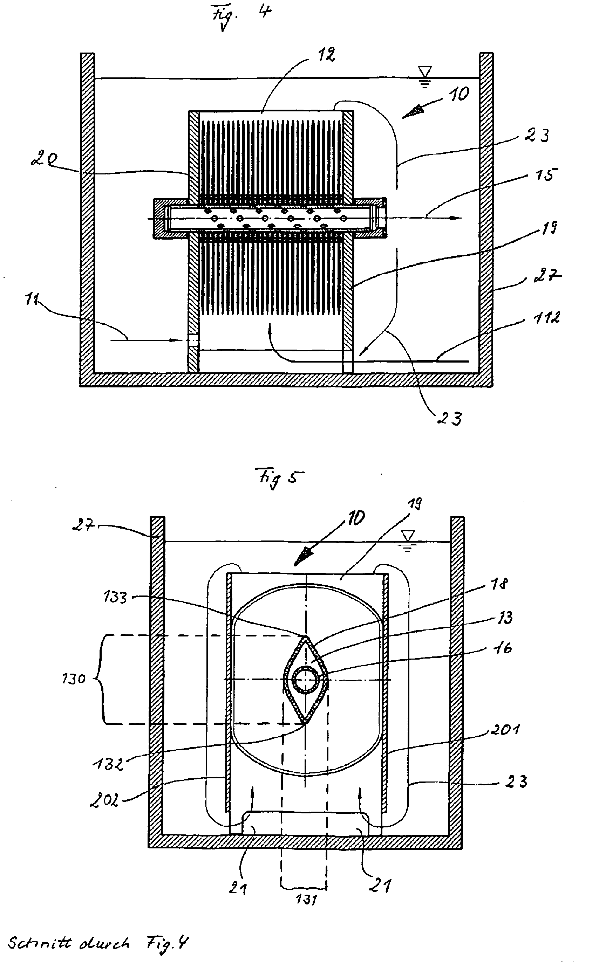

In Fig. 3 ist beispielhaft ein Membranelement 14 dargestellt, das aus zwei Membranelementseiten 140, 141 besteht, die am umlaufenden Rand 143 druckdicht miteinander verbunden sind, beispielsweise mittels Schweißung, Klebung oder sonstigen geeigneten Dichtungs- bzw. Verbindungsmitteln. Innerhalb des als Membrantasche ausgebildeten Membranelements 14, vgl. Fig. 2, ist ein flächiges Stabilisierungselement 142 vorgesehen, das dem Membranelement 14 eine Eigenstabilität vermittelt, so daß das Membranelement 14, wie in den Figuren dargestellt, quasi eigenstabil im Raum, hier im Innenraum 33 eines Gehäuses 26 bzw. eines Behälters 27, in dem das Strömungsmedium angeordnet ist bzw. hindurchgeleitet wird, steht.

Im wesentlichen im Zentrum bei der in Fig. 3 dargestellten Ausführungsform des Membranelements 14 ist ein Abstandselement 13 angeordnet, das in Strömungsrichtung 17, vgl. die Pfeile von Fig. 3, des zu trennenden Mediums 11 eine größere Ausdehnung 130 als Ausdehnung 131 quer zur Strömungsrichtung 17 aufweist. Bei der in Fig. 3 dargestellten Ausgestaltung ist das Abstandselement 13 an seinen beiden in Strömungsrichtung 17 ausgerichteten Enden 132, 133 spitz zulaufend ausgebildet.

Die vorbeschriebene Formgebung des Abstandselements 13 ermöglicht es, daß sich in Strömungsrichtung 17 hinter dem Abstandselement 13 keine Totzonen für das Strömungsmedium 11 bilden können, so daß sich dort auch beim bestimmungsgemäßen Trennbetrieb der Vorrichtung 10 keine Keime für die Ausbildung von Ablagerungen bilden können. Die in Strömungsrichtung liegenden vorderen und hinteren Enden 132, 133 des Abstandselements 13 sind geringfügig gerundet, so daß das besagte Dichtungselement 18, das in Form eines 0-Ringes ausgebildet sein kann, auch in diesen Bereichen des Abstandselements 13 dichtend und fest anliegt. Für die dichtende und feste Anlage des Dichtungselements 18 am Abstandselement 13 sorgt auch die am umlaufenden Rand 134, der im wesentlichen senkrecht zur Ebene der Membranelemente 14 verläuft, ausgebildete Nut, die das Dichtungselement 18 aufnimmt.

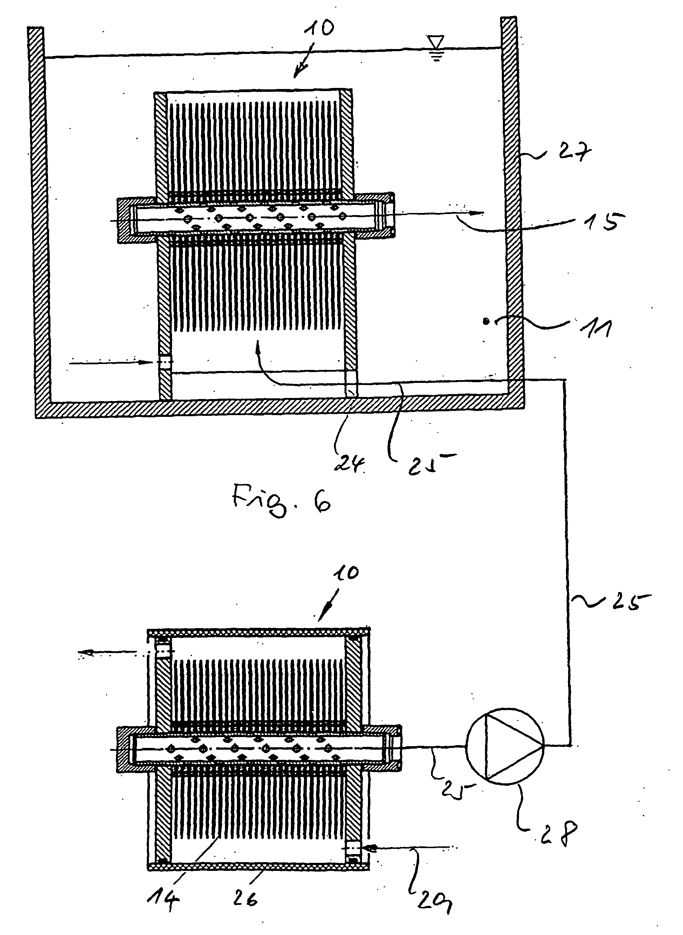

Bei der in Fig. 4 dargestellten Ausgestaltung der Vorrichtung 10 ist kein Gehäuse 26 vorgesehen, d. h. die Vorrichtung kann in gehäusefreier Form, beispielsweise in einen Behälter 27 für das Strömungsmedium 11 hineingesetzt werden und dort über nicht dargestellte Mittel gehalten bzw. auf dem Boden des Behälters 27 abgestellt werden. Durch Bewegung des Strömungsmediums 11 können mit Hilfe des Spülgasstromes 112 faktisch alle Oberflächen der Membranelemente 14 vom Strömungsmedium 11 umflossen und gesäubert werden, wobei das die Vorrichtung 10 verlassende Retentat 23 wiederum in den Kreislauf des Überfließens des Strömungsmediums 11 über die Oberflächen der Membranen 14 eingekoppelt wird. Für die Fließbewegung des Strömungsmediums 11 im vorbeschriebenen Sinne kann eine (hier nicht dargestellte) Pumpe verwendet werden, die zusätzlich zum Spülgas 112 für eine Kreislaufbewegung des Strömungsmediums 11 im Behälter 27 sorgt.

Fig. 5 zeigt das gemäß Fig. 4 dargestellte und vorangehend beschriebene Prinzip in der Seitenansicht im Schnitt.

Bei der Anordnung gemäß Fig. 6 sind zwei Vorrichtungen 10 hintereinandergeschaltet, wobei die in Fig. 6 unten dargestellte Vorrichtung 10 der Sauerstofftrennung dient, d. h. Umgebungsluft als primäres gasförmiges Medium 29 wird auf die Vorrichtung 10 gegeben, wobei die dort verwendeten Membranelemente 14 Sauerstoffselektive Membranelemente sind, so daß als Permeat der Vorrichtung 10 sauerstoffangereichertes gasförmiges Medium 25 entsteht, das über eine Pumpe 28 auf die Vorrichtung 10 geleitet werden kann, die in Fig. 6 oben dargestellt ist. Mit dem sauerstoffangereicherten gasförmigen Medium 25 wird der biologische Reinigungsprozess im Behälter 27 beschleunigt, d. h., daß bei gleichem Anlagevolumen ein größerer Durchsatz möglich ist.

### Bezugszeichenliste

10 Vorrichtung
11 Strömungsmedium
112 Spülgas
12 Stapel (von Membranelementen)
13 Abstandselement
130 Ausdehnung (längs)
131 Ausdehnung (quer)
132 Ende
133 Ende
134 Rand
14 Membranelement
140 erste Seite Membranelement
141 zweite Seite Membranelement
142 Stabilisierungselement
143 Rand
15 Permeat
16 Element (Permeatsammelelement)
17 Strömungsrichtung (Strömungsmedium)
18 Dichtungselement
182 Formdichtung
19 Begrenzungselement (stirnseitig)
20 Begrenzungselement (stirnseitig)
201 Begrenzungselement (axial)
202 Begrenzungselement (axial)
21 Zulauf
22 Ablauf
23 Retentat
24 Belüftungsöffnung
25 gasförmiges Medium (angereichert)
26 Gehäuse
27 Behälter (Strömungsmedium)
28 Pumpe
29 gasförmiges Medium (primäres)
30 Raum
31 Mutter
32 Mutter
33 Innenraum

## Patentansprüche

1. Vorrichtung (10) zum Aufbereiten und Trennen von, insbesondere biologisch organischen, Strömungsmedien (11) durch flüssige oder gasförmige Membranpermeation, umfassend einen Stapel (12) aus einer Mehrzahl voneinander mittels eines Abstandselements (13) beabstandeter Membranelemente (14), wobei die Membranelemente (14) des Stapels (12) vom Strömungsmedium (11) umflossen werden und das von den Membranelementen (14) gelieferte Permeat in wenigstens einem den Stapel (12) durchquerenden Element (16) gesammelt und nach außen abgeführt wird, wobei das Abstandselement (13) in Strömungsrichtung (17) des zu trennenden Mediums (11) eine größere Ausdehnung (130) als Ausdehnung (131) quer zur Strömungsrichtung (17) aufweist, **dadurch gekennzeichnet, dass** am Rand (134) des Abstandselements (13) ein Dichtungselement (18) so angeordnet ist, dass sich das Dichtungselement (18) zwischen zwei Membranelementen (14) befindet.

2. Vorrichtung (10) nach Anspruch 1, **dadurch gekennzeichnet, dass** das Abstandselement (13) an seinen beiden in Strömungsrichtung (17) ausgerichteten Enden (132, 133) spitz zulaufend ausgebildet ist.

3. Vorrichtung (10) nach Anspruch 1 oder 2, **dadurch gekennzeichnet, dass** die Abstandselemente (13) im Stapel (12) der Membranelemente (14) eine unterschiedliche Dicke aufweisen.

4. Vorrichtung (10) nach einem der Ansprüche 1 bis 3, **dadurch gekennzeichnet, dass** am Abstandselement (13) der im Wesentlichen senkrecht zur Ebene der Membranelemente (14) verlaufende Rand (134) derart ausgebildet ist, dass das den Rand (134) umlaufende Dichtungselement (18) am Rand (134) befestigbar ist.

5. Vorrichtung (10) nach Anspruch 4, **dadurch gekennzeichnet, dass** das Dichtungselement (18) in Form eines O-Ringes ausgebildet ist.

6. Vorrichtung (10) nach Anspruch 5, **dadurch gekennzeichnet, dass** das Dichtungselement (182) als Formelement ausgebildet ist.

7. Vorrichtung (10) nach einem oder mehreren der Ansprüche 1 bis 6, **dadurch gekennzeichnet, dass** die Membranelemente (14) in Form so genannter Membrantaschen ausgebildet sind.

8. Vorrichtung (10) nach Anspruch 7, **dadurch gekennzeichnet, dass** in den Membrantaschen zwischen den diese jeweils beidseitig begrenzenden Membranelementseiten (140, 141) jeweils wenigstens ein flächiges Stabilisierungselement (142) ausgebildet ist.

9. Vorrichtung (10) nach einem oder mehreren der Ansprüche 1 bis 8, **dadurch gekennzeichnet, dass** der Stapel (12) wenigstens beidseitig mit scheibenförmig ausgebildeten Begrenzungselementen (19, 20; 201, 202) versehen ist.

10. Vorrichtung (10) nach Anspruch 9, **dadurch gekennzeichnet, dass** in wenigstens einem Begrenzungselement (19) wenigstens ein Zulauf (21) für das Strömungsmedium (11) und/oder wenigstens ein Ablauf für das Retentat (23) vorgesehen ist.

11. Vorrichtung (10) nach Anspruch 9 oder 10, **dadurch gekennzeichnet, dass** in wenigstens einem Begrenzungselement (20) wenigstens eine Belüftungsöffnung (24) für die Zufuhr eines gasförmigen Mediums (25) vorgesehen ist.

12. Vorrichtung (10) nach Anspruch 11, **dadurch gekennzeichnet, dass** das gasförmige Medium (25) zur Unterstützung des biologischen Prozesses im Behälter (27) mit Sauerstoff anreichenbar ist.

13. Vorrichtung (10) nach Anspruch 11 oder 12, **dadurch gekennzeichnet, dass** diese sauerstoffselektive Membranelemente (14) aufweist.

14. Vorrichtung (10) nach einem oder mehreren der Ansprüche 1 bis 13, **dadurch gekennzeichnet, dass** der Stapel (12) in einem Gehäuse (26) aufgenommen wird.

15. Vorrichtung (10) nach Anspruch 14, **dadurch gekennzeichnet, dass** das Gehäuse (26) druckdicht ausgebildet ist.

16. Vorrichtung (10) nach einem oder mehreren der Ansprüche 1 bis 15, **dadurch gekennzeichnet, dass** mittels eines Spülgasstromes (112) kontinuierlich oder im Impulsbetrieb über die Membranelemente (14) deren Reinigung und/oder eine Förderung des Strömungsmediums (11) über die Membranelemente (14) erzeugbar ist.

## Claims

1. Apparatus (10) for the treatment and separation of, particularly biologically organic, flow media (11), by liquid or gaseous membrane permeation, comprising a stack (12) of a plurality of membrane elements (14) spaced apart from each other by means of a spacer (13), wherein flow medium (11) flows around the membrane elements (14) of the stack (12) and the permeate supplied by the membrane elements (14) is collected in at least one element (16) crossing the stack (12) and removed to the outside, wherein the spacer (13) has a greater extension (130) in the flow direction (17) of the medium to be separated (11) than the extension (131) transversely to the flow direction (17), **characterised in that** a sealing element (18) is arranged at the edge (134) of the spacer (13) in such a way that the sealing element (18) is located between two membrane elements (14).

2. Apparatus (10) according to claim 1, **characterised in that** the spacer (13) is formed so as to run into a point at its ends (132, 133) pointing in the flow direction (17).

3. Apparatus (10) according to clam 1 or 2, **characterised in that** the spacers (13) have a different thickness in the stack (12) of the membrane elements (14).

4. Apparatus (10) according to one of the claims 1 to 3, **characterised in that** on the spacer (13) the edge (134) running substantially perpendicular to the plane of the membrane elements (14) is formed in such a way that the sealing element (18) running around the edge (134) can be fixed to the edge (134).

5. Apparatus (10) according to claim 4, **characterised in that** the sealing element (18) is implemented in the form of an O-ring.

6. Apparatus (10) according to claim 5, **characterised in that** the sealing element (182) is implemented as a moulded element.

7. Apparatus (10) according to one or more of the claims 1 to 6, **characterised in that** the membrane elements (14) are implemented in the form of so-called membrane pockets.

8. Apparatus (10) according to claim 7, **characterised in that** at least one respective flat stabilising element (142) is formed in the membrane pockets between the membrane element sides (140, 141) defining them on both sides.

9. Apparatus (10) according to one or more of the claims 1 to 8, **characterised in that** the stack (12) is provided at least on both sides with disc-like delimiting elements (19, 20; 201, 202).

10. Apparatus (10) according to claim 9, **characterised in that** at least one inflow (21) for the flow medium (11) and / or at least one outflow for the retentate (23) is / are provided in at least one delimiting element (19).

11. Apparatus (10) according to claim 9 or 10, **characterised in that** at least one ventilation opening (24) is provided in at least one delimiting element (20) for the supply of a gaseous medium (25).

12. Apparatus (10) according to claim 11, **characterised in that** the gaseous medium (25) can be enriched with oxygen in order to support the biological process in the container (27).

13. Apparatus (10) according to claim 11 or 12, **characterised in that** it comprises oxygen-selective membrane elements (14).

14. Apparatus (10) according to one or more of the claims 1 to 13, **characterised in that** the stack (12) is housed in a housing (26).

15. Apparatus (10) according to claim 14, **characterised in that** the housing (26) is designed so as to be pressure-tight.

16. Apparatus (10) according to one or more of the claims 1 to 15, **characterised in that** by means of a purge gas flow (112) continuously or in pulsed operation over the membrane elements (14), the latter can be purified and / or conveying of the flow medium (11) can be produced over the membrane elements (14).

## Revendications

1. Dispositif (10) pour la préparation et la séparation de milieux d'écoulement (11), en particulier biologiques-organiques, à travers des membranes perméables liquides ou gazeuses comprenant un empilement (12) d'une multitude d'éléments membranaires (14) écartés les uns des autres au moyen d'un élément écarteur (13), les éléments écarteurs (14) de l'empilement (12) étant baignés par les milieux d'écoulement (11) et le perméat fourni par les éléments membranaires (14) étant accumulé dans au moins un des éléments (16) traversant l'empilement (12) et étant évacué vers l'extérieur, l'élément écarteur (13) présentant dans le sens de l'écoulement (17) du milieu à séparer (11) un élargissement supérieur (130) à l'élargissement (131) transversalement au sens d'écoulement (17), **caractérisé en ce que**, à la périphérie (134) de l'élément écarteur (13) un élément d'étanchéité (18) est disposé de façon telle que l'élément d'étanchéité (18) se trouve entre deux éléments membranaires (14).

2. Dispositif (10) selon la revendication 1, **caractérisé en ce que** l'élément écarteur (13) est réalisé aux deux extrémités (132, 133) orientées dans le sens d'écoulement (17) sous forme de pointes confluentes.

3. Dispositif (10) selon la revendication 1 ou 2, **caractérisé en ce que** les éléments écarteurs (13) dans l'empilage (12) des éléments membranaires (14) présentent une épaisseur différente.

4. Dispositif (10) selon l'une des revendications 1 à 3, **caractérisé en ce que** le bord (134) disposé sur l'élément écarteur (13) essentiellement verticalement au plan de l'élément membranaire (14) est formé de façon telle que l'élément d'étanchéité (18) disposé sur le bord (134) soit fixable.

5. Dispositif (10) selon la revendication 4, **caractérisé en ce que** l'élément d'étanchéité (18) est modelé sous forme d'un joint torique.

6. Dispositif (10) selon la revendication 5, **caractérisé en ce que** l'élément d'étanchéité (182) est formé en tant qu'élément façonné.

7. Dispositif (10), selon une ou plusieurs des revendications 1 à 6, **caractérisé en ce que** les éléments membranaires (14) sont formés sous forme dites de poches membranaires.

8. Dispositif (10) selon la revendication 7, **caractérisé en ce que** dans les poches membranaires, entre les deux côtés de l'élément membranaire (140, 141) qui définissent celui-ci, un élément de stabilisation plat (142) est formé à chaque fois.

9. Dispositif (10) selon une ou plusieurs des revendications 1 à 8, **caractérisé en ce que** l'empilage (12) est pourvu, au moins des deux côtés, d'éléments de limitation formés en tant que disques (19, 20; 201, 202).

10. Dispositif (10) selon la revendication 9, **caractérisé en ce qu'**il est prévu, dans au moins un élément limitant (19), au moins un orifice d'arrivée (21) pour le milieu d'écoulement (11) et/ou au moins un orifice d'évacuation pour le rétentat (23).

11. Dispositif (10) selon la revendication 9 ou 10, **caractérisé en ce qu'**il est prévu, dans au moins un élément limitant (20), un orifice d'aération (24) pour l'alimentation en un milieu gazeux (25).

12. Dispositif (10) selon la revendication 11, **caractérisé en ce que** le milieu gazeux (25) est enrichissable en oxygène pour favoriser les processus biologiques dans le récipient (27).

13. Dispositif (10) selon la revendication 11 ou 12, **caractérisé en ce que** celui-ci présente un élément membranaire sélectif de l'oxygène (14).

14. Dispositif (10) selon une ou plusieurs des revendications 1 ou 13, **caractérisé en ce que** l'empilage (12) est repris dans le logement (26).

15. Dispositif (10) selon la revendication 14, **caractérisé en ce que** le logement (26) est exécuté étanche.

16. Dispositif (10) selon une ou plusieurs des revendications 1 à 15, **caractérisé en ce que**, à l'aide d'un gaz de purge (112), en continu ou en discontinu à travers les éléments membranaires (14), leur nettoyage et/ou un transport du milieu d'écoulement (11) peuvent être créés.
